(19) **Europäisches Patentamt / European Patent Office / Office européen des brevets**

(11) **EP 3 635 282 B1**

(12) # EUROPEAN PATENT SPECIFICATION

(45) Date of publication and mention
of the grant of the patent:
**15.12.2021 Bulletin 2021/50**

(51) Int Cl.:
**F16K 17/30** *(2006.01)*          **F15B 13/02** *(2006.01)*
**F15B 20/00** *(2006.01)*          **F15B 13/08** *(2006.01)*

(21) Application number: **17751147.4**

(22) Date of filing: **09.06.2017**

(86) International application number:
**PCT/IT2017/000117**

(87) International publication number:
**WO 2018/225102 (13.12.2018 Gazette 2018/50)**

(54) **SAFETY VALVE FOR HYDRAULIC SYSTEMS**

SICHERHEITSVENTIL FÜR HYDRAULISCHE SYSTEME

SOUPAPE DE SÉCURITÉ POUR SYSTÈMES HYDRAULIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.04.2020 Bulletin 2020/16**

(73) Proprietor: **Buffo, Salvatore**
**73039 Tricase (Lecce) (IT)**

(72) Inventor: **Buffo, Salvatore**
**73039 Tricase (Lecce) (IT)**

(74) Representative: **Inchingalo, Simona**
**Bugnion S.p.A.**
**Viale Lancetti, 17**
**20158 Milano (IT)**

(56) References cited:
**DE-U1- 8 426 955          US-A- 2 375 498
US-A1- 2010 154 902      US-A1- 2011 297 251
US-B1- 6 443 180**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical field

The present invention refers to a safety valve for hydraulic systems. A typical but not exclusive application of the invention is in the iron and steel industry.

## State of the art

Hydraulic systems are widely used in the manufacturing, industrial and mobility areas for power transmission. In fact, these systems allow to handle remarkable power through components that have considerably smaller dimensions and weights than those of other types of systems that utilize different technologies.

In hydraulic power transmission, the substantial incompressibility of oil is exploited to transfer pressure from a pumping system to an actuator, through a suitable circuit. Typically, the hydraulic system comprises a pump, a tank, a distribution circuit, one or more distributors, and one or more actuators. The pump generates pressure inside the system and ensures the required oil flow rate for moving the actuator. Each distributor allows to activate and deactivate a single actuator. The distribution circuit usually includes a pressure line (conventionally designated by P) that supplies the oil from the tank to the distributor and a return line (designated by T) which returns the oil from the distributor to the tank. The distributor is then connected to the respective actuator by two service lines (conventionally designated by A and B), whose connection configuration to the delivery and return lines is changed by the distributor. In this way, the actuator is activated in the desired manner. The actuator can usually be a hydraulic cylinder or a hydraulic motor.

In a typical embodiment, an hydraulic system can include, in relation to a single pump, several dozens of actuators, each connected to their service lines (A and B) and then to the pressure and return lines (P and T).

Oil used in hydraulic systems is usually mineral oil, but alternative solutions are explored, which will be discussed later.

To connect two hydraulic members, fixed to one another, rigid pipes are usually employed. On the contrary, to connect two hydraulic members, which are mobile in relation to each other, flexible hoses must be used.

Hydraulic systems, though widely appreciated, are not without any drawbacks and criticalities.

As mentioned before, hydraulic systems often have to perform heavy tasks in wearing environments. For this reason, these systems are frequently subject to accidents during which high-pressure oil can be released. Oil leakage can be caused by the breaking of the flexible hoses, which is a critical point in the system, or by the extrusion of gaskets on flanges and fittings along the circuit. If there is a leak, the pressurized oil can instantly become atomized, in the form of a cloud of micronized particles.

A typical application of hydraulic systems is in the steel industry, where steel is used at high temperatures, i.e. at temperatures well above 400°C. As the skilled person can well understand, in this context a leak of pressurized oil creates a seriously dangerous situation, especially if the atomized oil is flammable.

The lighting of the cloud of atomized oil first causes a flame, called flash fire, and then a permanent fire dart, known as jet fire, which runs out only when the oil supply is exhausted. The jet fire can therefore only be interrupted by emergency blocks and/or interruptions of the pumping system, otherwise it continues until exhaustion of the oil supply in the tank.

This condition poses a huge threat to both business assets (machinery, plant, equipment, materials, semi-finished products, finished products, etc.) and, above all, for personnel who may be present at the time of the flash fire. Unfortunately, people who are involved in the flash fire have no chance of saving themselves. Such accidents are numerous, and their severity in terms of damage to people depends only on the casual presence of operators around the oil release source.

A tragic example of this kind of accident is the one that occurred at the Tyssen Krupp plant in Turin (Italy) between 5 and 6 December 2007. This incident is sadly known because it caused seven deaths.

To date, to address this serious problem, some fire prevention solutions have been proposed, which are briefly discussed below.

Some systems are based on manual or assisted maneuvering for blocking the oil circuit in case of emergency. The so-called "halting" of the system thus occurs based on the detection of an emergency situation. Detection can be:

(a) performed by an operator
(b) for the automatic fire detection;
(c) for the automatic detection of an abnormally low oil level in the tank upstream of the pumping system; or
(d) for the automatic detection of an abnormal drop in pressure in the circuits.

Solutions (a), (b) and (c) take effect when damage to things and people has already occurred. In particular, solution (c) is absolutely useless and with uncertain results.

Solution (d) can work if pressure sensors are applied to all lines of each actuator. In this case, since the system usually has several dozens of actuators, the solution is very costly, in particular to secure existing installations. In addition, in order to implement this solution, it is necessary to stop the systems.

Other possible solutions include the replacement of mineral oil with other non-likewise flammable fluids.

A first class of fluids that can replace mineral oil in power transmission are water-based fluids, typically a mixture of water and glycol. Such fluids have excellent fire resistance, but they are not able to completely solve the problem. In fact, these fluids can only be used in newly constructed systems, which, by the way, are more expensive and subject to faster wearing than traditional systems. In fact, water-based fluids do not guarantee the same lubrication of traditional mineral oil, lubrication that is necessary for the proper functioning of hydraulic machinery designed to use mineral oil. This solution cannot therefore be adopted to secure the existing hydraulic systems, unless major replacements of the main components and accurate washing of the circuit are envisaged.

A second class of fluids that can replace mineral oil are self-extinguishing oil-based fluids. Such fluids have the advantage of not allowing the propagation of fire within the same, once this has been ignited. However, these fluids cannot guarantee anything in the quite frequent case where the oil jet continues to be directed on an external trigger such as steel at high temperature (higher than 400°C) inside the steel plant. In that case, therefore, the fire will be kept until the ignition source is removed or, just like in the case of mineral oil, until supply is interrupted. Also, these fluids are considerably more expensive than mineral oil. Ultimately, therefore, the adoption of self-extinguishing oil based fluids constitutes only a partial solution to the problem. DE8426955U discloses a safety valve according to the preamble of claim 1. US2375498 discloses another example of known safety valve.

## Object of the invention

Therefore, the object of the present invention is to overcome the drawbacks and issues of the known art highlighted above.

In particular, a task of the present invention is to provide a fire prevention solution that can be applied to existing hydraulic systems without having to modify them substantially.

In addition, it is a task of the present invention to provide a fire prevention solution for hydraulic systems that is sufficiently compact and cost-effective to be installed on the feed line of each individual actuator.

Still, an object of the present invention is to provide a passive system that does not need assisted mechanisms, detection systems, manual drives, electrical power supplies, etc.

This object and tasks are achieved by means of a safety valve according to claim 1.

## Brief description of the drawings

To better understand the invention and appreciate its advantages, some of its exemplifying and non-limiting embodiments are described below with reference to the accompanying drawings, wherein:

- Figure 1 schematically shows an industrial hydraulic system comprising a plurality of lines according to the prior art;

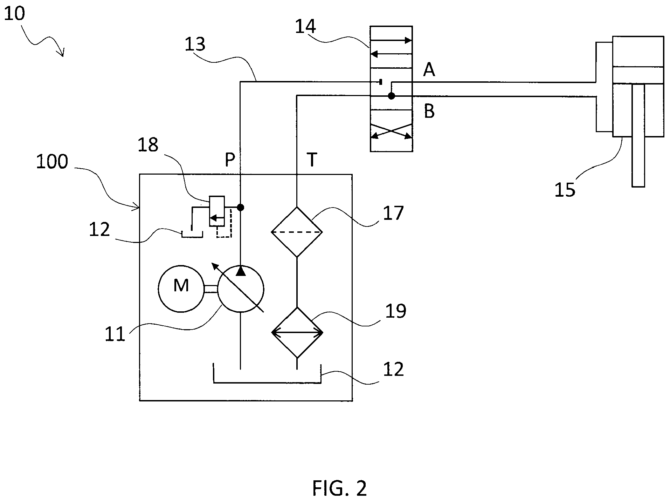

- Figure 2 shows the functional hydraulic diagram of a single line of the hydraulic system of Figure 1;
- Figure 3 shows a schematic perspective view of a valve bank according to the invention;
- Figure 4 shows a connection diagram of the components of a distribution station, in accordance with sector regulations;
- Figure 5 shows the functional hydraulic diagram of a distribution station, comprising two valves according to the invention; and
- Figure 6 shows a schematic sectional view of a valve according to the invention.

## Detailed description of preferred embodiments of the invention

The invention relates to a safety valve 20 for a hydraulic system 10. The safety valve 20 comprises: an inlet 21, an outlet 22, and a channel 23.

For the safety valve 20, a maximum oil flow rate $Q_m$ is predetermined. Channel 23 is suitable to guarantee an operating oil flow from inlet 21 to outlet 22, the operating oil flow having a flow rate between zero and the maximum operating flow rate value $Qm$.

In addition, the safety valve 20 according to the invention includes emergency blocking means 24 positioned along channel 23. The emergency blocking means 24 are adapted to be actuated by an oil flow along channel 23 which exceeds the maximum operating flow rate $Q_m$ and are suitable for closing the channel 23.

Preferably, the emergency blocking means 24 are adapted to close the channel 23 in order to make equal to zero the oil flow rate reaching the outlet 22.

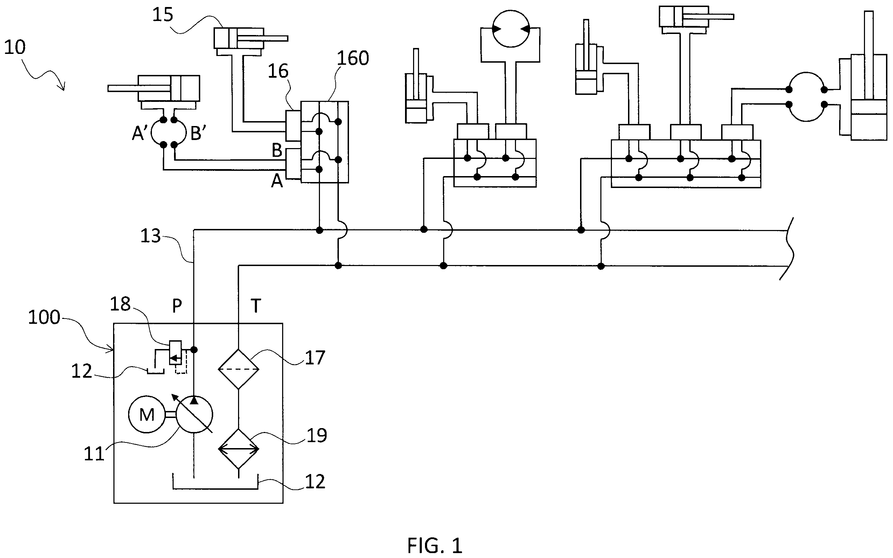

The safety valve 20 according to the invention is intended to be used within a hydraulic system 10. In a known manner, the hydraulic system typically comprises a hydraulic control unit 100 connected through a distribution circuit 13 to at least one valve bank 160. The hydraulic control unit 100 comprises at least one pump 11 and a tank 12. Each valve bank 160 includes one or more distribution stations 16. Each distribution station 16 comprises a distributor 14 which controls the supply of an actuator 15. The distribution circuit 13 feeds the oil from the tank 12 to the distributor 14 (via a pressure line P) and returns the oil from the distributor 14 to the tank 12 (via a return line T). Moreover, the distribution circuit 13 also includes service lines A and B connecting the actuator 15 to the pressure line P and to the return line T according to a scheme which can be reconfigured by the distributor 14. Referring specifically to Figure 1, the lines of the distribution circuit 13, which are obtained by means of flexible hoses, are indicated with a prime, hence the flexible service lines are indicated by A' and B'. Typically, the system will also include other components such as a filter 17, a heat exchanger 19 and a maximum pressure valve 18. However, such components have no relation to the safety valve 20 according to the invention and therefore will no longer be considered.

More specifically, the safety valve 20 according to the invention is intended to be installed on a service line A or B of a distribution circuit 13 of the hydraulic system 10. Preferably, the safety valve 20 will be installed on a service line intended to feed a single actuator 15. In this way, in the design phase of a new system or in the modernization phase of an existing plant, it is possible to define the maximum oil flow rate that may be needed to feed the actuator 15. This flow rate defines the maximum operating flow rate $Q_m$ of the safety valve 20. Any operating flow rate required by actuator 15 will be between zero (when no movement of actuator 15 is required) and $Q_m$ (when movement at maximum speed of actuator 15 is required). Any further increase in the flow rate exceeding $Q_m$ within the service line A or B must be attributed to a malfunction, in particular to an oil leak downstream of the safety valve 20.

As the skilled person knows well, the oil flow rate $Q$ within a duct is defined as follows:

$$Q = \rho \, A \, v$$

where $\rho$ is oil density, $A$ is the area of the duct section and $v$ is oil speed.

Within the same oil flow, it is also possible to consider the dynamic pressure $P_d$, i.e. that part of the pressure exerted by the oil by virtue of its kinetic energy. The dynamic pressure $P_d$ is defined as follows:

$$P_d = \tfrac{1}{2} \, \rho \, v^2$$

where $\rho$ is oil density and $v$ is oil speed.

From the above, the skilled person can understand well how an increase of the flow rate $Q$ within a duct having a constant section $A$ can only derive from an increase in oil speed $v$, since this is considered substantially incompressible (constant $\rho$). For this reason, an increase in the flow rate $Q$ within a duct implies a much greater increase in the dynamic pressure $P_d$ within the same duct, since this is proportional to the square of speed $v$.

In light of this consideration, the Applicant has developed emergency blocking means 24 adapted to react to a variation in flow rate and therefore in dynamic pressure.

In accordance with the invention, emergency stop means 24 include a shutter 240 and a spring 241 for which a preload value is predetermined. The shutter 240 is adapted to move between an open position and a closed position of the channel 23. In the open position, the shutter 240 releases the oil passage, while in the closed position the shutter 240 abuts against a seat 242 defined within the body of the safety valve 20 so as to close the oil passage. Preferably in the closed position, the shutter 240 completely closes the oil passage.

Preferably, the shutter 240 is arranged such that the dynamic pressure $P_d$ exerted by the oil flow tends to move it from the open position to the closed position. The spring 241 is designed to counteract the thrust exerted by the dynamic pressure $P_d$ of the oil flow. In particular, the preload value of the spring 241 is suitable for counteracting the dynamic pressure $P_d$ within the values it assumes with a lower oil flow rate than the maximum operating flow rate $Q_m$. When a consistent oil leakage occurs downstream of the safety valve 20, the flow rate $Q$ within the service line A or B increases beyond the maximum operating flow rate value $Q_m$. Together with the flow rate $Q$, the dynamic pressure $P_d$ increases to the point of overcoming the force of spring 241. In this case, therefore, the shutter 240 is pushed against the respective seat 242, closing the oil passage.

According to the invention, the preload value of the spring 241 can be adjusted during the operating life of the safety valve 20. In this way, you can easily reconfigure the plant in order to deal with different actuators 15 that may require different maximum operating flow rates.

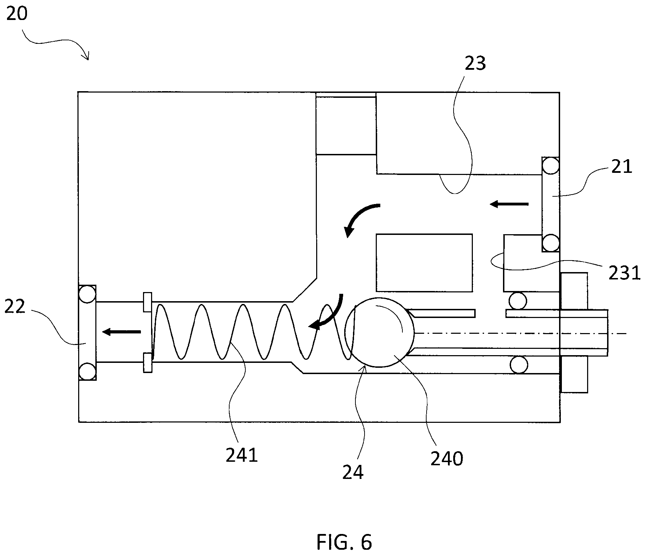

According to the invention and in accordance with the embodiment of the safety valve 20 of Figure 6, the channel 23 comprises a main channel 230 and an auxiliary channel 231. According to the invention, the emergency blocking means 24 are arranged so as to be actuated by the oil flow rate along the auxiliary channel 231. In particular, the abnormal increase in flow rate $Q$ and dynamic pressure $P_d$ of the oil along the auxiliary channel 231 causes displacement of the shutter 240 from the open position to the closed position. It is to be noted that in this configuration, in closed position, the shutter 240 closes both the auxiliary channel 231 and main channel 230.

Preferably, the safety valve 20 according to the invention has a so-called *sandwich* configuration which represents a standard in the field of hydraulic systems and allows their modular assembly. In particular, the *sandwich* safety valve 20 can easily be interposed between other components of the hydraulic system 10, even when the latter is already in existence.

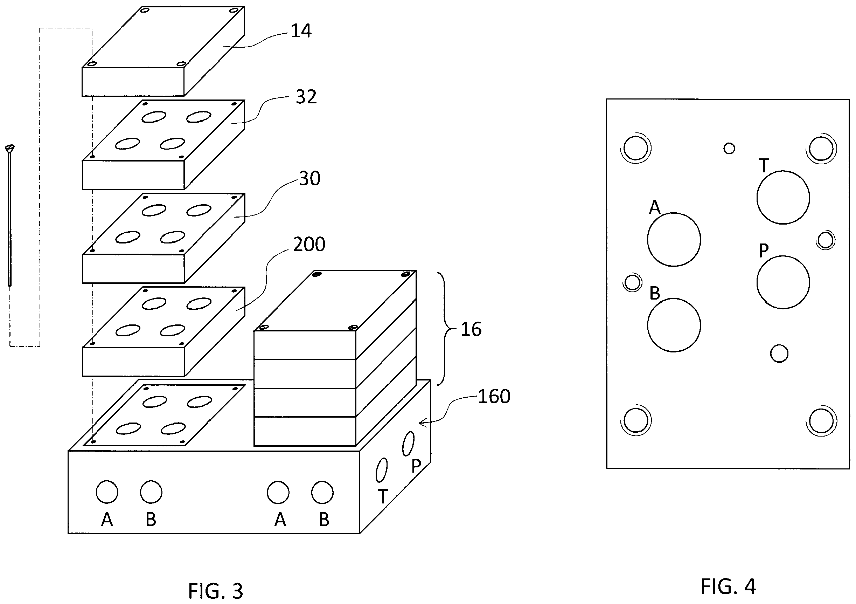

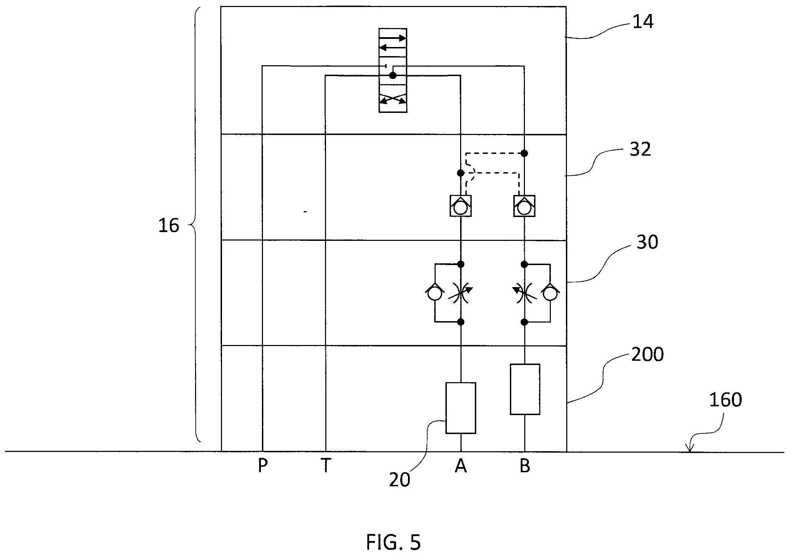

With particular reference to Figures 3 to 5, briefly described below is a distribution station 16 comprising a plurality of *sandwich* configuration devices. On a valve bank 160, the ports for the different distribution circuit lines 13 are arranged: the pressure line P, the return line T and the two service lines A and B. The valve station 160 is mounted on the distribution station 16 which is composed of a combination of one or more of the devices known in the art, which are briefly described below. The overall functions performed by the distribution station 16 are given by the sum of functions performed individually by each of the present devices.

A known distribution station 16 may include a flow regulator assembly 30, suitable for adjusting the maximum flow rate, usually through a variable duct narrowing.

A known distribution station 16 may include a check valve assembly 32, suitable for allowing oil flow to a service line (for example A) only when there is adequate pressure also in the other service line (for example B).

A known distribution station 16 may include a pressure reducer assembly 34 which is suitable for imposing a controlled and localized pressure drop, in order to reduce the oil pressure in its own line.

A known distribution station 16 may include a distributor 14 suitable for defining the connection configuration between the upstream lines (pressure line P and return line T) and downstream lines (service lines A and B) in order to control the actuator 15.

A distribution station 16 according to the invention also includes a safety valve assembly 200. The safety valve assembly 200 comprises at least one safety valve 20 according to the invention. Preferably, the safety valve assembly 200 comprises two safety valves 20 according to the invention, one along the service line A and the other along the service line B.

More specifically, the safety valve assembly 200 preferably has a configuration in accordance with the standards defined by ISO (*International Organization for Standardization*) in collaboration with CETOP (*Comité Europeen des Transmissions Oléhydrauliques et Pneumatiques*). In particular, the safety valve assembly 200 preferably has a configuration according to ISO 4401. Within this standard, the safety valve assembly 200 preferably has nominal dimensions defined according to one of the following standards: NG6, NG10, NG16 (whose map is schematically shown in Figure 4), NG22, NG25, and NG32.

In accordance with a further aspect, the invention relates to a hydraulic system 10. The hydraulic system 10 comprises a hydraulic control unit 100 (comprising in turn a pump 11 and a tank 12), a distribution circuit 13, a distributor 14, and one or more actuators 15. In a per se known manner, the distribution circuit 13 supplies the oil from the tank 12 to the distributor 14 (along the pressure line P) and returns the oil from the distributor 14 to the tank 12 (along the return line T). Furthermore, the two service lines A and B connect the actuator 15 to the pressure line P and to the return line T according to a scheme reconfigurable by the distributor 14. The hydraulic system 10 according to the invention further comprises at least one safety valve 20 in accordance with one of the embodiments described above. Preferably, the safety valve 20 is mounted on one of the two service lines A and B. More preferably, the hydraulic system 10 according to the invention comprises two safety valves 20, one for each of the two service lines A and B.

As the skilled person may well understand from the foregoing, the safety valve 20 according to the invention is an excellent fire prevention solution for hydraulic systems. In fact, as described above with reference to the prior art, the fire problem becomes really serious when a substantial leak of oil occurs along a distribution circuit line. However, as described above, in the case of a significant loss of oil, the increase in flow rate within the line causes closure of the safety valve 20 by the emergency blocking means 24. The interruption of the oil flow by the safety valve 20 is immediate and therefore minimizes any possible damage.

Because of its extremely simple and robust design and its operation that does not require any external power, the safety valve 20 according to the invention is particularly suitable for performing heavy tasks in wearing environments.

As the skilled person may well understand, the invention allows to overcome the drawbacks highlighted above with reference to the prior art. In particular, the present invention offers a fire prevention solution that can be applied to existing hydraulic systems without having to modify them substantially. The only action required is disassembling the distribution station 16, which must be protected, from the valve bank 160, adding a safety valve assembly 200 between the devices and reassembling the distribution station 16 again.

In addition, the present invention offers a fire prevention solution for hydraulic systems, which is sufficiently compact and cost-effective to be installed on the feed line of each individual actuator.

It is clear that the specific features are described in relation to various embodiments of the invention with exemplifying and non-limiting intent. Obviously, a person skilled in the art may make further modifications and variations to this invention, in order to meet contingent and specific requirements. For example, the technical features described in connection with an embodiment of the invention may be extrapolated from it and applied to other embodiments of the invention. Such modifications and variations are, however, contained within the scope of the invention, as defined by the following claims.

**Claims**

1. Safety valve (20) for a hydraulic system (10) comprising oil, , said safety valve comprising:

   - an inlet (21);
   - an outlet (22); and
   - a channel (23);

       wherein, for the safety valve (20), a maximum operating flow rate value $Q_m$ of the oil is predefined, and wherein the channel (23) is suitable to guarantee an operating oil flow from the inlet (21) to the outlet (22), the operating oil flow having a flow rate comprised between zero and the maximum operating flow rate value $Q_m$;
       wherein the safety valve (20) further comprises emergency blocking means (24) positioned along the channel (23); and

wherein the emergency blocking means (24) are adapted to be actuated by an oil flow rate along the channel (23) which exceeds the maximum operating flow rate $Q_m$ and are suitable for closing the channel (23); wherein the emergency blocking means (24) comprise a shutter (240) adapted to move between an open position and a closed position of the channel (23), and a spring (241) for which a preload value is predetermined, and wherein the preload value of the spring (241) can be adjusted during the operating life of the safety valve (20); **characterized in that** the channel (23) comprises a main channel (230) and an auxiliary channel (231), and **in that** the emergency blocking means (24) are adapted to be actuated by an oil flow rate along the auxiliary channel (231).

2. Safety valve (20) according to claim 1, wherein the emergency blocking means (24) are adapted to close the channel (23) in order to make zero the oil flow rate reaching the outlet (22).

3. Safety valve assembly (200) comprising at least one safety valve (20) in accordance with any preceding claim, wherein the safety valve assembly (200) has a so-called *sandwich* configuration that allows modular assembly.

4. Hydraulic system (10) comprising a pump (11), a tank (12), a distribution circuit (13), a distributor (14) and an actuator (15), further comprising at least one safety valve (20) in accordance with any one of claims 1 or 2.

5. Hydraulic system (10) according to the preceding claim, wherein the hydraulic system (10) comprises:

   - a pressure line P that supplies oil from the tank (12) to the distributor (14);
   - a return line T that supplies oil from the distributor (14) to the tank (12);
   - two service lines A and B connecting the actuator (15) to the pressure line P and to the return line T according to a reconfigurable scheme via the distributor (14);
   wherein the safety valve (20) is provided along at least one of the two service lines A and B.

6. Hydraulic system (10) according to claim 4 or 5, comprising a first and a second safety valve (20), one provided along a first of said service lines (A) and the other provided on a second of said service lines (B).

7. Hydraulic system (10) according to any of claims 4 to 6, further comprising a distribution station (16) comprising a plurality of *sandwich* configuration devices, wherein the at least one safety valve has a sandwich configuration.

**Patentansprüche**

1. Sicherheitsventil (20) für ein hydraulisches System (10), die Öl umfassen, wobei das genannte Sicherheitsventil Folgendes umfasst:

   - einen Einlass (21);
   - einen Auslass (22); und
   - einen Kanal (23);

   worin für das Sicherheitsventil (20) ein maximaler Betriebsdurchflusswert $Q_m$ des Öls vorgegeben ist und worin der Kanal (23) geeignet ist, einen Betriebsölfluss vom Einlass (21) zum Auslass (22) zu garantieren, wobei der Betriebsöldurchfluss einen Durchfluss zwischen Null und dem maximalen Betriebsdurchflusswert $Q_m$ aufweist; worin das Sicherheitsventil (20) entlang des Kanals (23) positionierte Notsperrvorrichtungen (24) weiter umfasst; und worin die Notsperrvorrichtungen (24) geeignet sind, von einem Öldurchfluss entlang des Kanals (23) betätigt zu werden, der den maximalen Betriebsdurchfluss $Q_m$ überschreitet, und geeignet sind, den Kanal (23) zu schließen; worin die Notsperrvorrichtungen (24) einen Verschluss (240), der geeignet ist, sich zwischen einer geöffneten Position und einer geschlossenen Position des Kanals (23) zu bewegen, und eine Feder (241), für die ein Vorspannungswert festgelegt ist, umfassen, und worin der Vorspannungswert der Feder (241) während der Nutzungsdauer des Sicherheitsventils (20) eingestellt werden kann; **dadurch gekennzeichnet, dass** der Kanal (23) einen Hauptkanal (230) und einen Nebenkanal (231) umfasst, und dass die Notsperrvorrichtungen (24) geeignet sind, von einem Öldurchfluss entlang des Nebenkanals (231) betätigt zu werden.

2. Sicherheitsventil (20) nach Anspruch 1, worin die Notsperrvorrichtungen (24) geeignet sind, den Kanal (23) zu schließen, um den den Auslass (22) erreichenden Öldurchfluss auf Null zu bringen.

3. Sicherheitsventilbaugruppe (200), umfassend mindestens ein Sicherheitsventil (20) nach irgendeinem der vorangegangenen Ansprüche, wobei die Sicherheitsventilbaugruppe (200) eine sogenannte Sandwich-Konfiguration aufweist, die einen modulare Aufbau gestattet.

**4.** Hydraulisches System (10), umfassend eine Pumpe (11), einen Tank (12), einen Verteilerkreislauf (13), einen Verteiler (14) und einen Stellantrieb (15), weiter umfassend mindestens ein Sicherheitsventil (20) nach irgendeinem der Ansprüche 1 oder 2.

**5.** Hydraulisches System (10) nach dem vorangegangenen Anspruch, worin das hydraulische System (10) Folgendes umfasst:

- eine Druckleitung P, die Öl aus dem Tank (12) dem Verteiler (14) zuführt;
- eine Rückleitung T, die Öl aus dem Verteiler (14) dem Tank (12) zuführt;
- zwei Versorgungsleitungen A und B, die den Stellantrieb (15) nach einem neu rekonfigurierbaren Plan über den Verteiler (14) an die Druckleitung P und die Rückleitung T anschließen; worin das Sicherheitsventil (20) entlang mindestens einer der beiden Versorgungsleitungen A und B vorgesehen ist.

**6.** Hydraulisches System (10) nach Anspruch 4 oder 5, umfassend ein erstes und ein zweites Sicherheitsventil (20), von denen eines entlang einer ersten der genannten Versorgungsleitungen (A) und das andere auf einer zweiten der genannten Versorgungsleitungen (B) vorgesehen ist.

**7.** Hydraulisches System (10) nach irgendeinem der Ansprüche 4 bis 6, weiter umfassend eine Verteilerstation (16), die eine Vielzahl von Vorrichtungen in Sandwich-Konfiguration umfasst, worin mindestens ein Sicherheitsventil eine Sandwich-Konfiguration aufweist.

**Revendications**

**1.** Soupape de sécurité (20) pour un système hydraulique (10) comprenant de l'huile, ladite soupape de sécurité comprenant :

- une entrée (21) ;
- une sortie (22) ; et
- un canal (23) ;

où, pour la soupape de sécurité (20), une valeur de débit d'exploitation maximale $Q_m$ de l'huile est prédéfinie, et où le canal (23) est apte à assurer un flux d'huile d'exploitation de l'entrée (21) à la sortie (22), le flux d'huile d'exploitation ayant un débit compris entre zéro et la valeur de débit d'exploitation maximale $Q_m$ ;

où la soupape de sécurité (20) comprend en outre des moyens de blocage d'urgence (24) positionnés le long du canal (23) ; et où les moyens de blocage d'urgence (24) sont adaptés pour être actionnés par un débit d'huile le long du canal (23) qui dépasse le débit d'exploitation maximale $Q_m$ et sont aptes à fermer le canal (23) ;

où les moyens de blocage d'urgence (24) comprennent un obturateur (240) adapté pour se déplacer entre une position ouverte et une position fermée du canal (23), et un ressort (241) pour lequel une valeur de précharge est prédéterminée, et où la valeur de précharge du ressort (241) peut être réglée pendant la durée de vie utile de la soupape de sécurité (20) ;

**caractérisée en ce que** le canal (23) comprend un canal principal (230) et un canal auxiliaire (231), et **en ce que** les moyens de blocage d'urgence (24) sont adaptés pour être actionnés par un débit d'huile le long du canal auxiliaire (231).

**2.** Soupape de sécurité (20) selon la revendication 1, où les moyens de blocage d'urgence (24) sont adaptés pour fermer le canal (23) de façon à annuler le débit d'huile qui atteint la sortie (22).

**3.** Assemblage de soupape de sécurité (200) comprenant au moins une soupape de sécurité (20) selon l'une quelconque des revendications précédentes, où l'assemblage de soupape de sécurité (200) a une soi-disante configuration en sandwich qui permet l'assemblage modulaire.

**4.** Système hydraulique (10) comprenant une pompe (11), un réservoir (12), un circuit de distribution (13), un distributeur (14) et un actionneur (15), comprenant en outre au moins une soupape de sécurité (20) selon l'une quelconque des revendications 1 ou 2.

**5.** Système hydraulique (10) selon la revendication précédente, où le système hydraulique (10) comprend :

- une ligne de pression P qui alimente en huile du réservoir (12) au distributeur (14) ;
- une ligne de retour T qui alimente en huile du distributeur (14) au réservoir (12) ;
- deux lignes de service A et B reliant l'actionneur (15) à la ligne de pression P et à la ligne de retour T selon un schéma reconfigurable à travers le distributeur (14) ;

où la soupape de sécurité (20) est prévue le long de l'au moins une ligne des deux lignes de service A et B.

**6.** Système hydraulique (10) selon la revendication 4 ou 5, comprenant une première et une deuxième soupape de sécurité (20), la première étant prévue le long d'une première ligne desdites lignes de service (A) et l'autre étant prévue sur une deuxième ligne desdites lignes de service (B).

**7.** Système hydraulique (10) selon l'une quelconque des revendications 4 à 6, comprenant en outre une station de distribution (16) comprenant une pluralité de dispositifs de configuration en sandwich, où l'au moins une soupape de sécurité a une configuration en sandwich.

FIG. 1

FIG. 2

**FIG. 4**

**FIG. 3**

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 8426955 U

- US 2375498 A